# EUROPÄISCHE PATENTSCHRIFT

(11) **EP 0 929 249 B1**
(45) Veröffentlichungstag und Bekanntmachung des Hinweises auf die Patenterteilung: **03.05.2000**
(21) Anmeldenummer: 97939935.9
(22) Anmeldetag: 23.09.1997
(51) Int. Cl.: A47J 37/12

(54) **FRITEUSE**
DEEP FAT FRYER
FRITEUSE

(30) Priorität: 24.09.1996 BE 9600802
(43) Veröffentlichungstag der Anmeldung: 21.07.1999
(73) Patentinhaber: Kenwood Schumpf AG, 6340 Baar (CH)
(72) Erfinder: NAUTA, Wilhelm, Daniel, D-90409 Nürnberg (DE)
(74) Vertreter: Schmauder, Klaus Dieter
(86) Internationale Anmeldenummer: CH9700359
(87) Internationale Veröffentlichungsnummer: WO9812955

(56) Entgegenhaltungen:
- WO-A-91/04698
- CH-A- 587 040
- DE-A- 4 020 762
- GB-A- 2 262 895
- US-A- 4 031 820
- US-A- 5 323 762
- PATENT ABSTRACTS OF JAPAN vol. 096, no. 004, 30.April 1996 & JP 07 327824 A (MEKA:KK), 19.Dezember 1995,

## Beschreibung

### Technisches Gebiet

Die Erfindung betrifft eine Friteuse gemäss Oberbegriff des Anspruches 1.

Unter dem nachfolgend verwendeten Begriff "Fritierdampf" sollen alle absaugbaren Emissionen eines Fritierbehälters wie Dämpfe, Gase, Öltröpfchen und dergleichen verstanden werden.

### Stand der Technik

Friteusen der eingangs genannten Art sind gekannt, wobei der nächstliegende Stand der Technik in der WO-A-9104698 beschrieben ist. Bei dieser Friteuse wird der Fritierdampf unter die Wasseroberfläche eingeleitet und strömt dann zum Fritierbehälter zurück. Dabei hat es sich als nachteilig erwiesen, dass mit dieser Kühleinrichtung ein hoher Strömungswiderstand verbunden ist, der eine Reihe nachteiliger Eigenschaften zur Folge hat. Der hohe Strömungswiderstand bedingt einen Überdruck am Fritierbehälter und damit eine höhere Beanspruchung der Verschlusseinrichtung und insbesondere der Dichtungen, wobei überdies beim Öffnen des Deckels für den Benützer die Gefahr des Verbrühens besteht. Der Überdruck im Fritierbehälter führt zu einem unerwünschten höheren Fettgehalt im Fritiergut. Weiter erzeugen das Gebläse sowie der Durchtritt des Fritierdampfes unerwünschte Geräusche.

Die US-A-4031820 beschreibt eine Friteuse an deren Fritierkammer eine Absaugvorrichtung mit einem Absauggebläse angeschlossen ist, welche die abgesaugten Fritierdämpfe über eine nachgeschaltete Dampfwäsche an die Umgebung ausbläst. Da solche Dampfwäschen erfahrungsgemäss nicht 100%-ig wirksam sind, gelangen stets Anteile des Fritierdampfes an die Umgebung und führen zu einer Umweltbelastung durch Gerüche und Dämpfe. Bei der Friteuse, der Absaugvorrichtung und der Dampfwäsche handelt es sich überdies um drei eigenständige Vorrichtungen, die aneinandergehängt sind. Irgendwelche Anregungen zur Rückführung der gereinigten Dämpfe in die Fritierkammer lässt sich diesem Stand der Technik nicht entnehmen.

Die JP-A-07327824 beschreibt eine Friteuse mit einem offenen Fritierbehälter, an dessen einer Seite über dem Oelspiegel Fritierdämpfe abgesaugt werden. Diese Fritierdämpfe werden über eine interne Kühleinrichtung mit Sprüheinrichtung für Kühlflüssigkeit geführt und auf der anderen Seite des Fritierbehälters über eine Düse über dem Oelspiegel wieder zugeführt. Da der Fritierbehälter offen ist, kann bereits beim Absaugen nur ein Teil der Fritierdämpfe erfasst werden. Nach dem Abkühlen der Fritierdämpfe entweicht wiederum ein Teil der zurückgeführten und über den Fritierbehälter eingeblasenen Fritierdämpfe an die Umgebung. In der Kühleinrichtung ist erfahrungsgemäss nur eine teilweise Reinigung der Fritierdämpfe möglich. Die beim Absaugen und beim Einblasen der Fritierdämpfe an die Umgebung entweichenden Teil führen wiederum zu der bekannten, bereits oben erwähnten, Umweltbelästigung durch Gerüche und Oelniederschläge. Überdies können auch Fritierdämpfe in der Kühleinrichtung entweichen, da diese eine untere Abflussöffnung für die Kühlflüssigkeit und kondensierte Dampfteile aufweist, die in eine Auffangwanne mündet, die mit einem Ablauf versehen ist.

### Darstellung der Erfindung

Aufgabe der Erfindung ist es, eine Friteuse der eingangs genannten Art zu verbessern.

Die Aufgabe wird erfindungsgemäss gelöst durch die Merkmale des Anspruches 1.

Durch das Einsprühen von Sprühwasser in den vom Fritierbehälter austretenden Fritierdampf wird eine intensive Kühlung des Fritierdampfes erreicht, der in Verbindung mit dem Auftreffen des mit Sprühwasser versetzten Fritierdampfes auf der Wasseroberfläche eine grösstmögliche Kondensation der Dämpfe einerseits sowie eine Absorption von Gasen andererseits und die Ausscheidung etwaiger mitgerissener Öltröpfchen bewirkt, wodurch die bei Friteusen als unangenehm empfundene Geruchsbildung mindestens weitgehend vermieden wird. Im Vergleich zum eingangs zitierten Stand der Technik ist die Kühleinrichtung geräuscharm und weist einen niedrigen Strömungswiderstand auf. Dadurch wird ein unerwünschter Überdruck vermieden, wodurch die Abdichtung der Friteuse vereinfacht und ein erhöhter Fettgehalt im Fritiergut ebenso vermieden werden wie die Gefahr des Verbrühens beim Öffnen des Deckels. Eine besonders einfache, kompakte, wirkungsvolle und wirtschaftliche Ausbildung ergibt sich dadurch, dass das Gebläse als Axialgebläse mit einer Antriebswelle ausgebildet ist, auf welcher die mit einer selbstansaugenden Zentrifugalpumpe ausgestattete Sprühvorrichtung angeordnet ist. Es sind also keine zusätzlichen Antriebsvorrichtungen erforderlich, sondern die Antriebsvorrichtung für das Gebläse wird gleichzeitig auch für die Sprühvorrichtung eingesetzt.

Vorteilhafte Ausgestaltungen der Erfindung sind in den abhängigen Ansprüchen 2 bis 9 beschrieben.

Das Einsprühen von Sprühwasser kann in beliebiger Richtung erfolgen, die optimalste Wirkung erzielt man jedoch bei der Ausbildung nach Anspruch 2.

Besonders vorteilhaft ist eine Weiterbildung nach Anspruch 3, wodurch der Sprühkopf für Reinigungszwecke leicht zugänglich ist. Besonders zweckmässig ist eine Weiterbildung der Sprühvorrichtung nach Anspruch 4.

Besonders vorteilhaft ist eine Ausgestaltung der Friteuse nach Anspruch 5. Dadurch wird einerseits verhindert, dass eine allfällige Ablagerungsschicht von der Oberseite des Wassers abgesaugt und wieder versprüht wird und andererseits wird sichergestellt, dass das Wasser aus dem unteren Bereich des Wasserbehälters entnommen wird, in dem das Wasser in der Regel kühler i'st als an der Oberseite. Damit wird der Kühleffekt und damit die Kondensationswirkung verbessert.

Um einen Anstieg des Wasserspiegels über einen Maximalwert zu verhindern, ist eine Ausgestaltung nach Anspruch 6 zweckmässig. Der Überlauf bringt weiter den Vorteil, dass an der Wasseroberfläche aufschwimmende Ausscheidungen in den Auffangbehälter gelangen und abgeführt werden können. Dabei ist es weiter zweckmässig, wenn die Friteuse nach Anspruch 7 ausgestaltet ist, um das etwaige Austreten von Fritierdampf und damit eine Geruchsbelästigung weiter zu vermindern.

Mit der Weiterbildung nach Anspruch 8 ist es möglich, das Wärmeaufnahmevermögen im Wasserbehälter zu vergrössern, so dass die Kühleinrichtung selbst bei relativ kleinem Wasservolumen über längere Zeit wirksam ist.

Vorteilhaft ist auch eine Ausgestaltung nach Anspruch 9, wodurch verhindert wird, dass Kondensat in den Fritierbehälter gelangt.

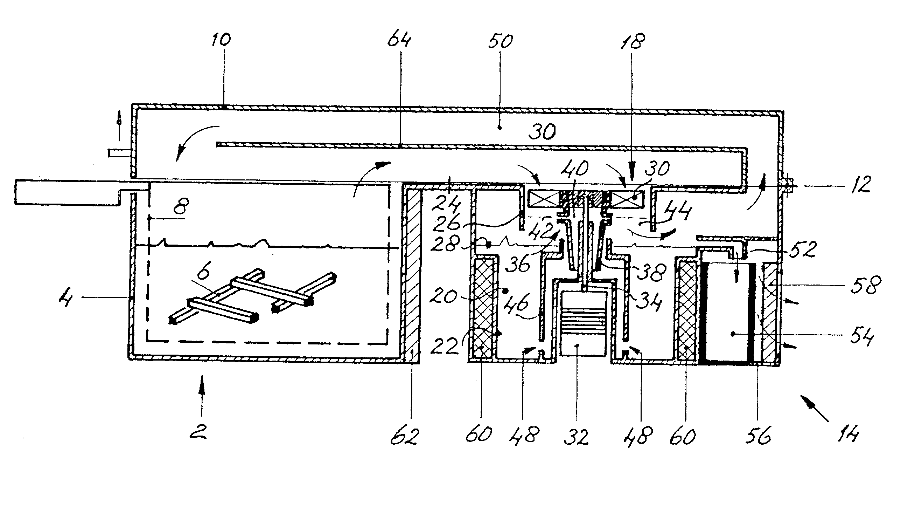

### Kurze Beschreibung der Zeichnung

Ausführungsbeispiele der Erfindung werden nachfolgend anhand einer Zeichnung näher beschrieben. In der einzigen Figur ist eine Friteuse im Vertikalschnitt in schematischer Weise dargestellt.

### Weg zur Ausführung der Erfindung

Die Figur zeigt in schematischer Darstellung die für die vorliegende Erfindung wesentlichen Bestandteile einer Friteuse. Die Friteuse enthält einen Fritierbehälter 2 mit einer Ölfüllung 4, in die das zu fritierende Gut 6 mit einem Fritierkorb 8 eingebracht wird. Der Fritierbehälter 2 ist mit einem Deckel 10 verschlossen, der über ein Scharnier 12 aufklappbar ist.

Der Fritierbehälter 2 ist mit einer Kühleinrichtung 14 verbunden, in der der Fritierdampf über eine Gebläse 18 abgesaugt, mittels Wasser 20 in einem Wasserbehälter 22 gekühlt und von geruchsbelästigenden Bestandteilen befreit und daraufhin im geschlossenen Kreislauf zum Fritierbehälter 2 zurückgeführt wird.

Im einzelnen enthält die Kühleinrichtung 14 eine Ableitung 24, welche vom Fritierbehälter 2 über den Deckel 10 zum Wasserbehälter 22 verläuft und dort in einem vertikalen Kanalstutzen 26 über der Wasseroberfläche 28 endigt. In dem Kanalstutzen 26 ist das als Axialgebläse ausgebildete Gebläse 18 angeordnet, welches ein Flügelrad 30 enthält, das auf einer von einem Motor 32 angetriebenen Antriebswelle 34 angeordnet ist. Die Antriebswelle treibt gleichzeitig auch eine Sprühvorrichtung 36, mit der Wasser aus dem Wasserbehälter 22 in den Fritierdampf-Strom quer zu dessen Förderrichtung eingesprüht wird.

Die Sprühvorrichtung 36 enthält einen sich nach unten konisch verjüngenden Ringkanal 38, der mit dem unteren Ende in das Wasser 20 eintaucht und am oberen Ende in einen Sprühkopf 40 mündet. Dieser ist unterhalb des Flügelrades 30 angeordnet und enthält am Umfang verteilte radial ausgerichtete Sprühöffnungen 42. Die Sprühvorrichtung saugt bei laufendem Gebläse selbsttätig Wasser aus dem Wasserbehälter 22 an und erzeugt über den Sprühkopf 40 einen radialen Sprühvorhang 44, durch den der Fritierdampf durchtritt. Im Wasserbehälter 22 ist eine das untere Ende des Ringkanales 38 umgebende Führungswand 46 angeordnet, die bis an den Boden des Behälters reicht und dort Durchtrittsöffnungen 48 aufweist, um dem Ringkanal stets Wasser aus dem unteren Bereich des Wasserbehälters 22 zuzuführen. Bei geöffnetem Deckel 10 sind das Flügelrad 30 und insbesondere die Sprühvorrichtung 36 für Reinigungszwecke leicht zugänglich.

Der auf der Wasseroberfläche 28 auftreffende Fritierdampf wird in eine Zuleitung 50 umgelenkt und dem Fritierbehälter 2 wieder zugeführt. Der Motor 32 ist zweckmässigerweise in seiner Drehzahl regelbar, um das Gebläse 18 und die Sprühvorrichtung 36 auf die Fritiergegebenheiten einstellen zu können.

Der Wasserbehälter 22 enthält einen Überlauf 52, dem ein Auffangbehälter 54 zugeordnet ist, damit der Spiegel der Wasseroberfläche 28 ein maximales Niveau nicht überschreitet und Überschusswasser sowie etwaige Ausscheidungen in dem Auffangsbehälter 54 abgeführt werden können. Der Auffangbehälter 54 ist in einer Kammer 56 angeordnet, die nach aussen durch ein Filter 58 abgeschlossen ist, das vorzugsweise ein Aktivkohlefilter ist, um einen Gasaustausch mit der Umgebung zu ermöglichen, jedoch geruchsbelästigende Bestandteile zurückzuhalten.

Im Wasserbehälter 22 ist ein Wärmespeicher 60 angeordnet, der beispielsweise Paraffine oder Salzhydrate enthält und sich bei Nichtgebrauch der Friteuse auf Umgebungstemperatur abkühlt und während des Betriebes der Friteuse Wärme aufnimmt. Gegebenenfalls können solche Wärmespeicher auch im vorgekühlten Zustand eingesetzt werden. Dadurch kann die Erwärmung des Wassers 20 im Wasserbehälter 22 verzögert und damit die Wirkungsweise der Kühleinrichtung verlängert werden, so dass mit einer geringeren Wassermenge eine längere Betriebszeit möglich ist. Eine zwischen dem Fritierbehälter 2 und dem Wasserbehälter 22 angeordnete Isolierung 62 verhindert ein Aufheizen des Wasserbehälters 22 durch den Fritierbehälter 2 während des Fritierens.

Ein die Zuleitung 50 im Deckel definierende Leitwand 64 kann gleichzeitig dazu dienen, etwaiges sich am Deckel niederschlagendes Kondensat in den Wasserbehälter 22 abzuleiten.

Das im Wasserbehälter 22 angeordnete Wasser 20 kann zur Verbesserung der Ausscheidungen und/oder des Geruchs einen oder mehrere Zusätze wie Essig, Zitrone, Zitronensäure, Ascorbinsäure, Eucalyptus und dergleichen enthalten.

### BEZUGSZEICHENLISTE

- 2: Fritierbehälter
- 4: Ölfüllung
- 6: Gut
- 8: Fritierkorb
- 10: Deckel
- 12: Scharnier
- 14: Kühleinrichtung
- 18: Gebläse
- 20: Wasser
- 22: Wasserbehälter
- 24: Ableitung
- 26: Kanalstutzen
- 28: Wasserspiegel
- 30: Flügelrad
- 32: Motor
- 34: Antriebswelle
- 36: Sprühvorrichtung
- 38: Ringkanal
- 40: Sprühknopf
- 42: Sprühöffnung
- 44: Sprühvorhang
- 46: Führungswand
- 48: Durchtrittsöffnung
- 50: Zuleitung
- 52: Überlauf
- 54: Auffangbehälter
- 56: Kammer
- 58: Filter
- 60: Wärmespeicher
- 62: Isolierung
- 64: Leitwand

## Patentansprüche

1. Friteuse mit einem Fritierbehälter (2) und mit einer Fritierdampf in einem geschlossenen Kreislauf von und zum Fritierbehälter (2) führenden Kühleinrichtung (14), welche einen Wasserbehälter (22) und ein Gebläse (18) enthält, dadurch gekennzeichnet, dass die Kühleinrichtung (14) eine in einer Ableitung (24) zwischen dem Fritierbehälter (2) und dem Wasserbehälter (22) angeordnete Sprühvorrichtung (36) zum Einsprühen von Wasser (44) aus dem Wasserbehälter (22) in den Kreislauf des Fritierdampfes aufweist, wobei der mit Sprühwasser versetzte Fritierdampf gegen die Wasseroberfläche (28) im Wasserbehälter (22) jedoch nicht durch das Wasser geführt ist, und wobei das Gebläse (18) als Axialgebläse mit einer Antriebswelle (34) ausgebildet ist, auf welcher die mit einer selbstansaugenden Zentrifugalpumpe ausgestattete Sprühvorrichtung (36) angeordnet ist.

2. Friteuse nach Anspruch 1, dadurch gekennzeichnet, dass die Sprührichtung der Sprühvorrichtung (36) wenigstens annähernd senkrecht zur Strömungsrichtung des Fritierdampfes ausgerichtet ist.

3. Friteuse nach Anspruch 1 oder 2, dadurch gekennzeichnet, dass die Sprühvorrichtung (36) am Umfang eines Sprühkopfes (40) angeordnete, im wesentlichen radial ausgerichtete Sprühöffnungen (42) aufweist, die vor oder vorzugsweise nach einem Flügelrad (30) des Axialgebläses (18) angeordnet sind und vorzugsweise von der Anströmseite des Fritierdampfes zugänglich sind.

4. Friteuse nach einem der Ansprüche 1 bis 3, dadurch gekennzeichnet, dass das Gebläse (18) und die Sprühvorrichtung (36) senkrecht stehend angeordnet sind und die Zentrifugalpumpe einen sich vom Sprühkopf (40) nach unten verlaufenden Ringkanal (38) aufweist, dessen Durchmesser nach unten zu kleiner wird und der mit dem unteren Ende in das Wasser (20) des Wasserbehälters (22) eintaucht.

5. Friteuse nach Anspruch 4, dadurch gekennzeichnet, dass im Wasserbehälter (22) Führungselemente (46) angeordnet sind, um der Sprühvorrichtung (36) Wasser aus dem unteren Bereich des Wasserbehälters (22) zuzuführen.

6. Friteuse nach einem der Ansprüche 1 bis 5, dadurch gekennzeichnet, dass im Wasserbehälter (22) ein Überlauf (52) vorhanden ist, dem ein Auffangbehälter (54) zugeordnet ist.

7. Friteuse nach Anspruch 6, dadurch gekennzeichnet, dass der Auffangbehälter (54) mit einem Aktivkohlefilter (58) nach aussen abgeschlossen ist.

8. Friteuse nach einem der Ansprüche 1 bis 7, dadurch gekennzeichnet, dass im Wasserbehälter (22) ein Wärmespeicher (60) angeordnet ist.

9. Friteuse nach einem der Ansprüche 1 bis 8, dadurch gekennzeichnet, dass sie einen Deckel (10) aufweist, der mit einer Kondensatführung (64) versehen ist, um beim Öffnen des Deckels etwaig vorhandenes Kondensat in den Wasserbehälter (22) abzuleiten.

## Claims

1. Deep fat fryer having a frying container (2) and having a cooling device (14) carrying frying vapour in a closed circuit from and to the frying container (2), said cooling device (14) containing a water container (22) and a fan (18), characterised in that the cooling device (14) has a spray device (36) mounted in an outlet pipe (24) between the frying container (2) and the water container (22), for spraying water (44) from the water container (22) into the circuit of the frying vapour, the frying vapour mixed with spray water being carried against the surface (28) of the water in the water container (22) but not through the water, and the fan (18) being constructed as an axial fan with a drive shaft (34) on which the spray device (36) equipped with a self-priming centrifugal pump is mounted.

2. Deep fat fryer according to claim 1, characterised in that the direction of spraying of the spray device (36) is aligned at least approximately perpendicularly to the direction of flow of the frying vapour.

3. Deep fat fryer according to claim 1 or 2, characterised in that the spray device (36) has substantially radially aligned spray openings (42) arranged around the periphery of a spray head (40), these openings (42) being arranged in front of or preferably behind an impeller (30) of the axial fan (18) and preferably being accessible from the inflow end of the frying vapour.

4. Deep fat fryer according to one of claims 1 to 3, characterised in that the fan (18) and the spray device (36) are arranged standing perpendicularly and the centrifugal pump has an annular channel (38) running downwards from the spray head (40), the diameter of which becomes smaller as it goes downwards and has its bottom end immersed in the water (20) of the water container (22).

5. Deep fat fryer according to claim 4, characterised in that guide elements (46) are arranged in the water container (22) for conveying water to the spray device (36) from the bottom part of the water container (22).

6. Deep fat fryer according to one of claims 1 to 5, characterised in that in the water container (22) there is an overflow (52) having an associated collecting container (54).

7. Deep fat fryer according to claim 6, characterised in that the collecting container (54) is closed off to the outside with an activated charcoal filter (58).

8. Deep fat fryer according to one of claims 1 to 7, characterised in that a heat store (60) is arranged in the water container (22).

9. Deep fat fryer according to one of claims 1 to 8, characterised in that it has a lid (10) which is provided with a condensation guide (64) for carrying away any condensation present into the water container (22) when the lid is opened.

## Revendications

1. Friteuse comportant une cuve de friture (2) et un dispositif de refroidissement (14), qui, en circuit fermé, guide la vapeur de friture à partir de la cuve de friture (2) et vers cette dernière, dispositif de refroidissement qui contient une cuve à eau (22) et une soufflante (18), caractérisée en ce que le dispositif de refroidissement (14) comporte un appareil de pulvérisation (36), disposé dans une dérivation (24) entre la cuve de friture (2) et la cuve à eau (22), pour injecter par pulvérisation de l'eau (44) provenant de la cuve à eau (22) dans le circuit fermé de la vapeur de friture, la vapeur de friture additionnée de l'eau de pulvérisation étant envoyée contre la surface (28) de l'eau se trouvant dans la cuve à eau (22), mais sans traverser l'eau, la soufflante (18) étant configurée comme un ventilateur axial comportant un arbre d'entraînement (34), sur lequel est disposé l'appareil de pulvérisation (36), qui est équipé d'une pompe centrifuge à amorçage automatique.

2. Friteuse selon la revendication 1, caractérisée en ce que la direction de pulvérisation de l'appareil de pulvérisation (36) est orientée au moins perpendiculairement à la direction d'écoulement de la vapeur de friture.

3. Friteuse selon la revendication 1 ou 2,
caractérisée en ce que l'appareil de pulvérisation (36) comporte des ouvertures de pulvérisation (42), orientées pour l'essentiel radialement, disposées sur la périphérie d'une tête de pulvérisation (40), ouvertures de pulvérisation qui sont disposées en avant et de préférence en arrière d'une roue à ailettes (30) du ventilateur axial (18), et de préférence sont accessibles par le côté d'arrivée de la vapeur de friture.

4. Friteuse selon l'une des revendications 1 à 3, caractérisée en ce que la soufflante (18) et l'appareil de pulvérisation (36) sont disposés verticalement, et que la pompe centrifuge comporte une gaine annulaire (38), courant vers le bas à partir de la tête de pulvérisation (40), et dont le diamètre diminue vers le bas, et qui, par son extrémité inférieure, plonge dans l'eau (20) de la cuve à eau (22).

5. Friteuse selon la revendication 4, caractérisée en ce que des éléments de guidage (46) sont disposés dans la cuve à eau (22) pour envoyer, à l'appareil de pulvérisation (36), de l'eau provenant de la zone inférieure de la cuve à eau (22).

6. Friteuse selon l'une des revendications 1 à 5, caractérisée en ce qu'un trop-plein (52) est présent dans la cuve à eau (22), trop-plein auquel est affecté un récipient récepteur (54).

7. Friteuse selon la revendication 6, caractérisée en ce que le récipient récepteur (54) est obturé vers l'extérieur par un filtre à charbon actif (58).

8. Friteuse selon l'une des revendications 1 à 7, caractérisée en ce qu'un accumulateur de chaleur (60) est disposé dans la cuve à eau (22).

9. Friteuse selon l'une des revendications 1 à 8, caractérisée en ce qu'elle comporte un couvercle (10), qui est pourvu d'un système de guidage (64) de condensats, pour évacuer dans la cuve à eau (22), lors de l'ouverture du couvercle, le condensat éventuellement présent.
